# EUROPEAN PATENT APPLICATION

(11) **EP 4 751 839 A1**
(43) Date of publication of application: **03.06.2026**
(21) Application number: 24877483.8
(22) Date of filing: 08.10.2024
(51) Int. Cl.: B23K 26/082, B23K 26/08, B23K 26/21, B23K 26/03, H01M 50/516

(54) **APPARATUS FOR MANUFACTURING SECONDARY BATTERY AND CORRECTION METHOD THEREOF**

(30) Priority: 12.10.2023 KR 20230135756
(71) Applicant: LG Energy Solution, Ltd., Seoul 07335 (KR)
(72) Inventor: LEE, Hyuk Soo, Daejeon 34122 (KR); KIM, Tae Kyung, Daejeon 34122 (KR); SEO, Sang Kee, Daejeon 34122 (KR); LEE, Won Jae, Daejeon 34122 (KR); PARK, Jung Hyun, Daejeon 34122 (KR); NA, Ki Beom, Daejeon 34122 (KR)
(74) Representative: Goddar, Heinz J.
(86) International application number: PCT/KR2024/015238
(87) International publication number: WO 2025/079946

(57) **Abstract**

Example embodiments provide a secondary battery manufacturing apparatus. The secondary battery manufacturing apparatus includes: a masking jig configured to secure electrode leads and bus bars and including first to fourth inner side walls defining opening exposing the electrode leads and the bus bars; a first beam source configured to generate welding beams; a second beam source configured to generate inspection beams; a scanner head configured to direct the welding beams and the inspection beams to the electrode leads and the bus bars; a detector; a processor; and a controller.

## Description

### [Technical Field]

The present invention relates to a secondary battery manufacturing apparatus and a method of calibrating the same. The present application claims the benefit of priority based on Korean Patent Application No. 10-2023-0135756, filed on October 12, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Cell manufacturers are paying huge capital expenditures to meet the growth of steep demand for secondary batteries for mobility. Companies are increasing productivity per line to maximize the return on invested capital, and to this end, various research is continuously being conducted to improve yield and productivity.

### [Disclosure]

### [Technical Problem]

The present invention is directed to providing a secondary battery manufacturing apparatus with improved productivity and a method of calibrating the same.

### [Technical Solution]

Example embodiments of the present invention provide a secondary battery manufacturing apparatus. The secondary battery manufacturing apparatus includes an oscillator configured to generate a processing beam, a scanner head configured to emit the processing beam generated by the oscillator to a material, a driving device configured to move the scanner head, and a processor configured to locate a focus of the scanner head, in which the oscillator includes a built-in sensor configured to sense reflected light that is a part of the processing beam reflected from the material, and the processor is configured to locate the focus of the scanner head, based on a signal generated by the built-in sensor.

The processor may be further configured to collect an intensity profile of the reflected light, based on the signal.

The processor may be configured to locate the focus of the scanner head, based on the intensity profile of the reflected light.

The processor may be configured to locate the focus of the scanner head, based on a duration of a peak of the intensity profile of the reflected light.

The processor may be configured to locate the focus of the scanner head, based on a shape of the intensity profile of the reflected light.

The processor may be configured to locate the focus of the scanner head, based on a pole of the intensity profile of the reflected light.

Example embodiments provide a method of calibrating a secondary battery manufacturing apparatus. The method includes emitting a processing beam to a material, the processing beam being emitted by a scanner head spaced a first working distance from the material; sensing first reflected light that is a part of the processing beam reflected from the material at the first working distance; and locating a focus of the scanner head, based on an intensity profile of the first reflected light, in which the first reflected light is sensed by a built-in sensor included in an oscillator configured to generate the processing beam.

The locating of the focus of the scanner head may be based on a duration of a peak of the intensity profile.

The locating of the focus of the scanner head may be based on a shape of the intensity profile.

The locating of the focus of the scanner head may be based on the pole of the intensity profile.

The method may further include moving the scanner head to a second working distance, emitting the processing beam to the material at the second working distance, and sensing second reflected light that is a part of the processing beam reflected from the material at the second working distance.

The focus of the scanner head may be located based on an intensity profile of the second reflected light.

The processing beam may be emitted to a first part of the material at the first working distance and emitted to a second part of the material, which is spaced apart from the first part of the material, at the second working distance.

### [Advantageous Effects]

According to example embodiments of the present invention, a focus of a scanner head can be located accurately. Accordingly, the productivity and yield of the manufacture of a secondary battery can be increased.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a diagram illustrating a secondary battery manufacturing apparatus according to exemplary embodiments.
FIG. 2 illustrates an oscillator of FIG. 1.
FIG. 3 is a flowchart of a method of calibrating a secondary battery manufacturing apparatus according to exemplary embodiments.
FIG. 4 is a diagram for describing a method of calibrating a secondary battery manufacturing apparatus according to exemplary embodiments.
FIGS. 5Ato 5D are graphs for describing a method of calibrating a secondary battery manufacturing apparatus according to exemplary embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

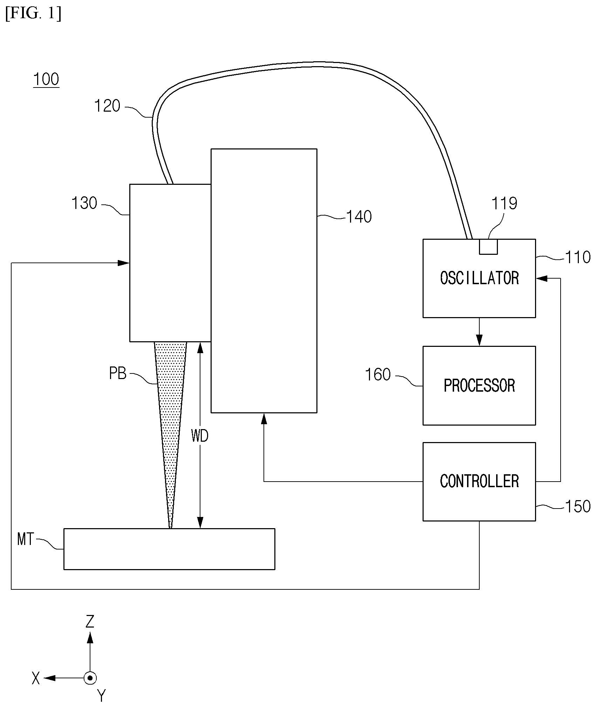

FIG. 1 is a diagram illustrating a secondary battery manufacturing apparatus 100 according to exemplary embodiments.

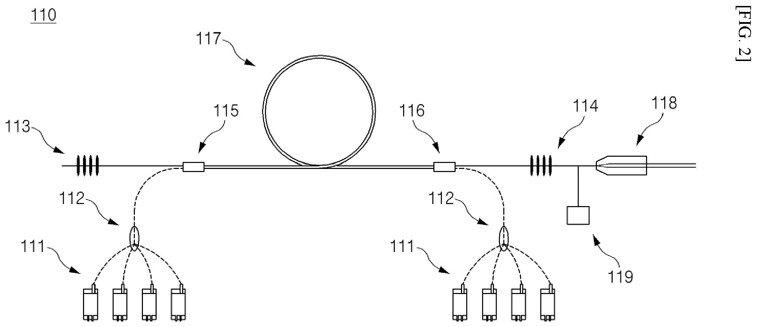

FIG. 2 illustrates an oscillator 110 of FIG. 1.

Referring to FIGS. 1 and 2, the secondary battery manufacturing apparatus 100 may include the oscillator 110, an optical cable 120, a scanner head 130, a driving device 140, and a controller 150.

The secondary battery manufacturing apparatus 100 may be configured to perform laser welding. As a non-limiting example, welding performed by the secondary battery manufacturing apparatus 100 may be keyhole welding. While keyhole welding is performed, a high-energy-density processing beam PB may be emitted to a workpiece, and a molten pool and hot molten steam that pushes the molten pool away may be generated. The secondary battery manufacturing apparatus 100 may be configured to process (i.e., weld) a frame of a battery module or weld an electrode lead of the battery cell to a bus bar.

The oscillator 110 may be a light amplification by stimulated emission of radiation (laser) device. The oscillator 110 may be configured to generate the processing beam PB. The processing beam PB may be a laser beam. According to exemplary embodiments, the processing beam PB may be a near-infrared ray. According to exemplary embodiments, a wavelength of the processing beam PB may be in a range of about 750 nm to about 2500 nm. According to exemplary embodiments, the wavelength of the processing beam PB may be about 1070 nm.

As a non-limiting example, the oscillator 110 may be a fiber laser. Based on the above description, those of ordinary skill in the art will be able to easily derive an embodiment in which the oscillator 110 is a solid laser device such as a semiconductor laser device, an Nd:YAG laser device or a titanium (Ti)-sapphire laser device, a liquid laser device such as a dye laser device, or a gas laser device such as a helium-neon laser device, a carbon dioxide laser device or an Excimer laser device.

The oscillator 110 may include a plurality of pump diodes 111, pump couplers 112, a first Bragg grating 113, a second Bragg grating 114, a first optical isolator 115, a second optical isolator 116, an active fiber 117, an output port 118, and a built-in sensor 119.

The pump diodes 111 may be configured to generate light based on an external signal and/or power (e.g., an electrical signal and/or power). The number of pump diodes 111 of the oscillator 110 may be determined based on a desired intensity of the processing beam PB to be output. That is, as the number of pump diodes 111 increases, maximum intensity of the processing beam PB may increase. Light generated from the pump diodes 111 may be collected in a feeding fiber (or a plurality of feeding fibers) through the pump couplers 112. The light collected in the feeding fiber may be coupled to the active fiber 117. The first and second optical isolators 115 and 116 may be configured to block reverse progression of light.

Each of the first and second Bragg gratings 113 and 114 may be a reflector. Light introduced into the active fiber 117 may be reflected and amplified by the first and second Bragg gratings 113 and 114 and thus the processing beam PB may be generated. A reflectivity of the second Bragg grating 114 may be different from that of the first Bragg grating 113. The reflectivity of the second Bragg grating 114 may be lower than that of the first Bragg grating 113. Accordingly, the processing beam PB penetrating the second Bragg grating 114 may be output through the output port 118. The output port 118 may be connected to the optical cable 120 or be configured to emit the processing beam PB through a free space.

The built-in sensor 119 may be configured to detect reflected light that is a part of the processing beam PB reflected from a material MT. The reflected light may be incident again on the oscillator 110 through the scanner head 130 and be detected by the built-in sensor 119. The built-in sensor 119 may be interposed between the second optical isolator 116 and the output port 118 or be taped to a waveguide (i.e., an optical fiber) of the processing beam PB between the second optical isolator 116 and the output port 118. The built-in sensor 119 may be configured to generate a signal (e.g., an electrical signal) based on the reflected light.

The processing beam PB generated by the oscillator 110 may be coupled to the scanner head 130 through the optical cable 120. Alternatively, the processing beam PB may be transmitted to the scanner head 130 through free space optics or an optical integrated circuit.

The scanner head 130 may be configured to emit the processing beam PB to the material MT. The scanner head 130 may be configured to focus the processing beam PB. In addition, the scanner head 130 may be configured to scan a workpiece by the processing beam PB to process the workpiece after the calibration of the secondary battery manufacturing apparatus 100 including the scanner head 130 is completed.

The scanner head 130 may include various types of optical elements that allow emission, scanning, and focusing of the processing beam PB, such as a beam splitter, galvo mirrors, scanning lenses such as F Theta lens, a dichroic mirror, a splitter, a half-wave plate, a 1/4-wave plate, a polarizer, and an optical filter. A focus of the scanner head 130 may be a focus of the processing beam PB emitted by the scanner head 130. The focus of the scanner head 130 may be a resulting focus of the various types of optical elements included in the scanner head 130. The processing beam PB coupled to the scanner head 130 through the optical cable 120 may pass through the various types of optical elements of the scanner head 130 and thereafter be focused at the focus of the scanner head 130.

The driving device 140 may be configured to move the scanner head 130. The driving device 140 may include a servo motor and a linear encoder and thus be configured to sense and accurately control movement of the scanner head 130 (more specifically, a movement amount of the scanner head 130 in an X-axis direction, a movement amount thereof in a Y-axis direction, and a movement amount thereof in a Z-axis direction).

Here, the X-axis direction and the Y-axis directions may be substantially parallel to a surface of the material MT, and the Z-axis direction may be substantially perpendicular to the surface of the material MT. The X-axis direction, the Y-axis direction, and the Z-axis direction may be substantially perpendicular to one another. The X-axis direction, the Y-axis direction, and the Z-axis direction may be defined based on a surface of a stage supporting the material MT.

The material MT may include a metal material. The material MT may partially melt as the processing beam PB is emitted thereto. Reflected light that is a part of the processing beam PB reflected from the material MT may reach the built-in sensor 119 of the oscillator 110 as described above. The material MT may be a sample for locating the focus of the scanner head 130 but is not limited thereto.

The controller 150 may be configured to control overall operations of the oscillator 110, the scanner head 130, and the driving device 140. The controller 150 may be configured to generate signals for controlling oscillation of the oscillator 110, a chopping frequency of the processing beam PB, intensity of the processing beam PB, and driving of the scanner head 130 and the driving device 140.

The processor 160 may be configured to analyze a signal generated by the built-in sensor 119.More specifically, the processor 160 may be configured to collect an intensity profile of the reflected light based on the signal generated by the built-in sensor 119. The processor 160 may be configured to locate the focus of the scanner head 130 based on the intensity profile of the reflected light. The processor 160 may be configured to determine a focus of the scanner head 130, based on a change in the intensity profile of the reflected light according to a working distance WD of the scanner head 130.

For example, the controller 150 may be configured to generate a signal for controlling the movement of the scanner head 130 by the driving device 140. To locate the focus of the scanner head 130, the scanner head 130 may be moved from a working distance WD of a process window. Here, the process window may be a range including the working distance WD when the focus of the scanner head 130 with respect to the known processing beam PB is on the material MT. Here, the focus of the scanner head 130 with respect to the known processing beam PB may be known by either the specifications of a product or optical modeling. Optical modeling may be provided based on the volume, density, molar heat capacity, melting point, and metal phase transformation energy of the material MT, which is a target metal, and an output of the processing beam PB.

For example, when the working distance WD is 30 mm, it is known that the focus of the processing beam PB is on the material MT, and a size of the process window is about ±20 mm, the driving device 140 may be configured to move the scanner head 130 such that the working distance WD is changed in a range of about 10 mm to about 50 mm. From working distances WD changed by the driving device 140, intensity profiles of reflected light of the processing beam PB may be collected.

The driving device 140 may be configured to change the working distance WD of the scanner head 130 (i.e., to move the scanner head 130) at set intervals, based on a control signal of the controller 150. The set interval may be in a range of about 0.1 mm to about 1 mm. For example, the driving device 140 may be configured to change the working distance WD of the scanner head 130 at about intervals of 0.1 mm. As another example, the driving device 140 may be configured to change the working distance WD of the scanner head 130 at about intervals of 1 mm.

As a non-limiting example, the controller 150 may be a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC. The controller 150 may include a power supply, a central process unit (CPU), an input interface, an output interface, a communication interface, and memory devices.

Here, the controller 150 and the processor 160 may be implemented as hardware, firmware, software, or a combination thereof. For example, the controller 150 and the processor 160 may be computing devices such as a workstation computer, a desktop computer, a laptop computer, and a tablet computer. The controller 150 and the processor 160 may be simple controllers, microprocessors, complex processors such as a CPU or a GPU, processors configured by software, dedicated hardware, or firmware. The controller 150 and the processor 160 may be implemented, for example, by a general-purpose computer or application-specific hardware such as a digital signal processor (DSP), a field-programmable gate array (FPGA) or an application specific integrated circuit (ASIC).

According to some embodiments, operations of the controller 150 and the processor 160 may be implemented as instructions stored on machine-readable media that are readable and executable by one or more processors. Here, the machine-readable medium may include an arbitrary apparatus for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may also be configured to perform the above-described operations of the controller 150 and the processor 160 or processes described below. However, the above description is provided only for convenience of description, and it should be understood that the above-described operations of the controller 150 and the processor 160 may be caused by a computing device, a processor, a controller, or other devices capable of executing firmware, software, routines, instructions, etc.

Due to tolerance of an optical system including the oscillator 110, the optical cable 120, and the scanner head 130, the focus of the scanner head 130 identified based on the specifications of a product may be different from an actual focus of the scanner head 130. According to exemplary embodiments, the focus of the scanner head 130 is determined using the built-in sensor 119 included in the oscillator 110 and thus may be located with high precision. The built-in sensor 119 is based on a fiber optical system and thus is a self-aligned element and therefore may contribute to reducing a time required for alignment and rearrangement of the optical system. Here, the alignment of the optical system may be initial setting for measurement and/or inspection, and the rearrangement thereof may be additional setting for calibrating misalignment due to thermal vibration. Furthermore, by using the built-in sensor 119, costs of purchasing an additional built-in sensor can be reduced, and resources (e.g., development resources) required to track the movement of the processing beam PB can be reduced.

### (Second Embodiment)

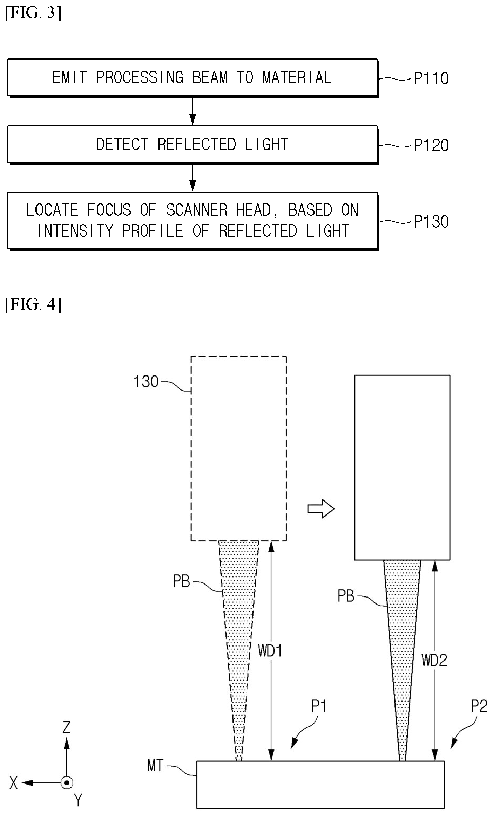

FIG. 3 is a flowchart of a method of calibrating a secondary battery manufacturing apparatus according to exemplary embodiments.

FIG. 4 is a diagram for describing a method of calibrating a secondary battery manufacturing apparatus according to exemplary embodiments.

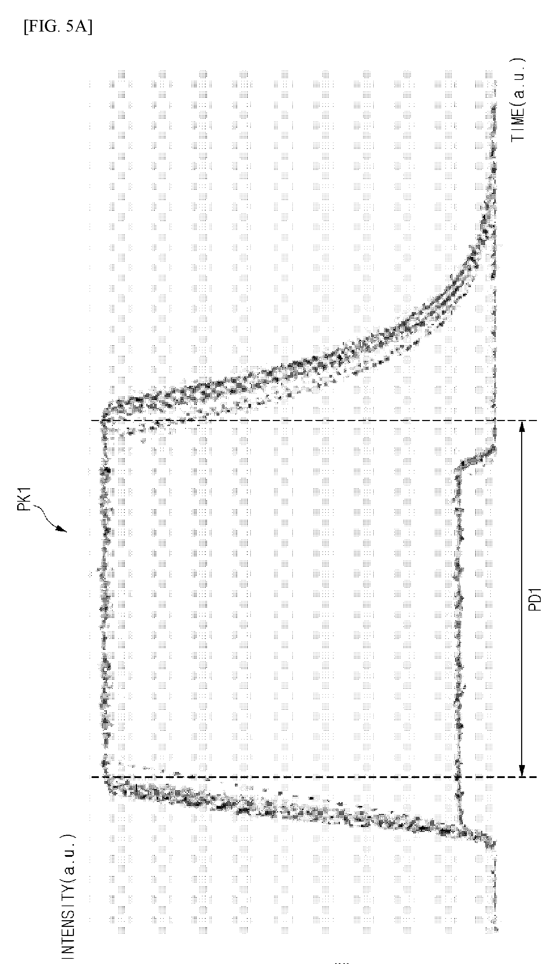

FIGS. 5A to 5D are graphs for describing a method of calibrating a secondary battery manufacturing apparatus according to exemplary embodiments.

Referring to FIGS. 1 and 3, in P110, a processing beam PB may be emitted to the material MT. The processing beam PB generated by the oscillator 110 may be emitted to the material MT through the scanner head 130. The processing beam PB may transfer energy to the material MT, thus causing a change of states of a surface of the material MT and the vicinity of the surface of the material MT. For example, the surface of the material MT to which the processing beam PB is emitted and the vicinity of the surface of the material MT may melt.

In P120, reflected light may be detected. The reflected light may be a part of the processing beam PB reflected from the material MT. The reflected light may be isotropic light such as scattered light but is not limited thereto. The reflected light may be transmitted to the oscillator 110 via the scanner head 130 and the optical cable 120. The reflected light may be sensed by the built-in sensor 119 of the oscillator 110.

In P130, a focus of the scanner head 130 may be determined based on intensity profile of the reflected light. The built-in sensor 119 may generate a signal indicating the intensity of the reflected light, based on the reflected light. The processor 160 may be connected to the built-in sensor 119. The processor 160 may be configured to collect an intensity profile of the reflected light, based on a signal generated by the built-in sensor 119.

Referring to FIGS. 1, 3, and 4, P110, P120, and the collecting of the intensity profile of the reflected light may be repeatedly performed a plurality of times while changing the working distance WD. Accordingly, as shown in FIGS. 5A to 5D, intensity profiles of a plurality of pieces of reflected light may be obtained according to the working distance WD.

For example, the scanner head 130 may be configured to emit the processing beam PB to a first part P1 of the material MT at a position spaced a first working distance WD1 from the material MT. First reflected light, which is a part of the processing beam PB reflected from the first part P1 of the material MT, may be sensed by the built-in sensor 119 of the oscillator 110, and a first intensity profile of the first reflected light may be collected by the processor 160.

The scanner head 130 may be configured to emit the processing beam PB to a second part P2 of the material MT at a position spaced a second working distance WD2 from the material MT. Second reflected light, which is a part of the processing beam PB reflected from the second part P2 of the material MT, may be sensed by the built-in sensor 119 of the oscillator 110, and a second intensity profile of the second reflected light may be collected by the processor 160.

Optical characteristics different from those of a part of the material M1 that has not been processed due to a change in a surface of the first part P1 may exhibit. Accordingly, in order to collect an intensity profile from the second working distance WD2, the processing beam PB may be emitted to the second part P2 spaced horizontally (e.g., in the X-axis direction and/or the Y-axis direction) from the first part P1.

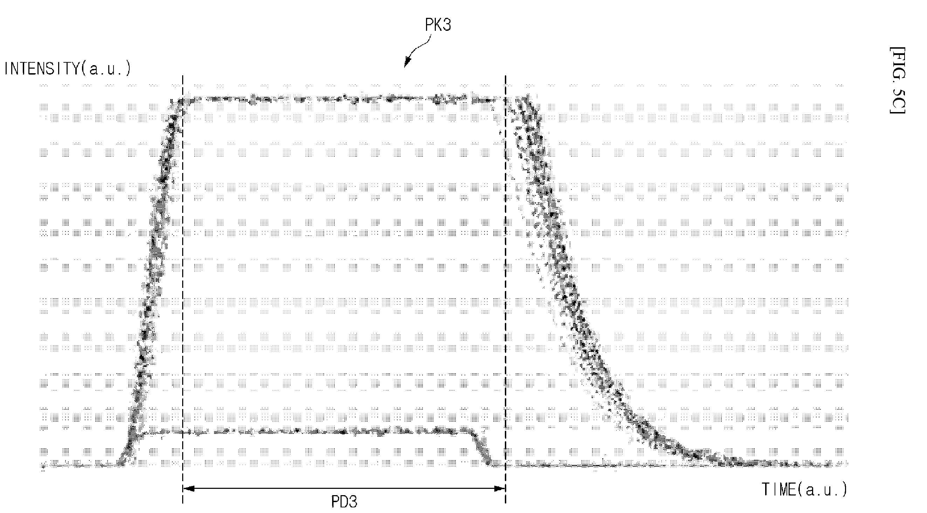

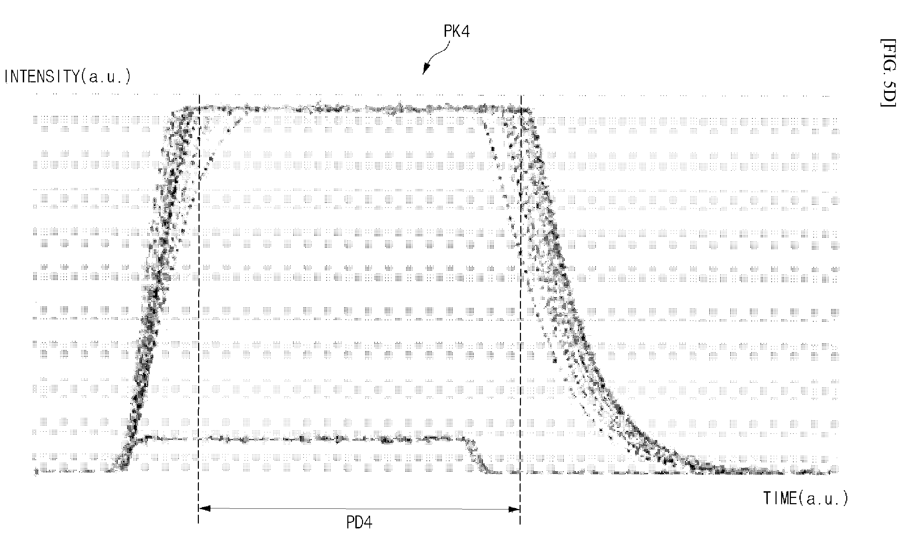

Intensity profiles of a plurality of pieces of reflected light may include peak intensities. The optical sensor 119 may be saturated at the peak intensities but embodiments are not limited thereto. In FIGS. 5A, 5C, and 5D, intensity profiles of reflected light may decrease after peak intensities thereof last for a set time. This is because the surface (or the vicinity of the surface) of the material MT is beyond the focus (or a field of focus) of the scanner head 120 with respect to the processing beam PB, and as a result, the states of the surface of the material MT and the vicinity of the surface of the material MT do not change or it takes a long time to change the states of the surface of the material MT and the vicinity of the surface of the material MT.

Accordingly, durations PD1, PD3 and PD4 of peaks PK1, PK3 and PK4 of the intensity profiles of the reflected light of FIGS. 5A, 5C, and 5D may be relatively long. For example, the durations PD1, PD3, and PD4 may be similar to a duration of the processing beam PB that causes reflected light.

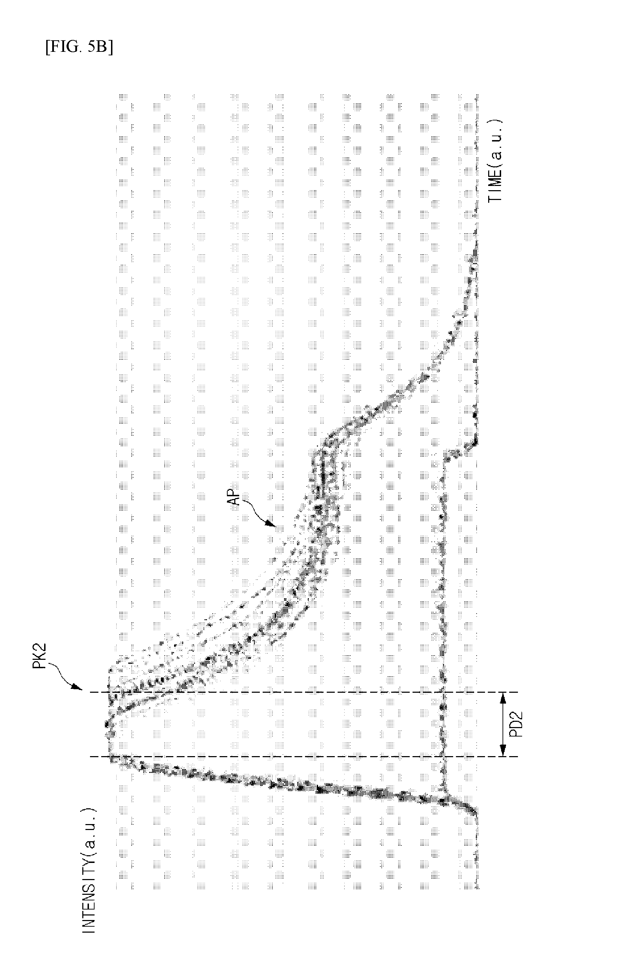

In contrast, in FIG. 5B, a duration of a peak of an intensity profile of reflected light may be relatively short. This is because the surface (or the vicinity of the surface) of the material MT is at the focus (or in the field of focus) of the scanner head 120 with respect to the processing beam PB and thus melts instantaneously. When the surface of the material MT melts, reflectivity of the material MT may decrease, thus causing a decrease in the intensity of reflected light.

Due to the decrease in the intensity of the reflected light, the intensity profile of the reflected light of FIG. 5B may include an additional pole AP. Here, the pole AP is a point at which a slope of a graph is substantially zero. An intensity of reflected light at the pole AP may be lower than an intensity of the reflected light at a peak. An additional pole of the intensity profile of the reflected light may be caused by the melting of the material MT within the duration of the processing beam PB.

Accordingly, a duration PD2 of a peak PK2 may be relatively short. For example, the duration PD2 of the peak PK2 may be less than or equal to about 1/2 of a duration of a pulse of the processing beam PB. For example, the duration PD2 of the peak PK2 may be less than or equal to about 1/3 of the duration of the pulse of the processing beam PB. For example, the duration PD2 of the peak PK2 may be less than or equal to about 1/4 of the duration of the pulse of the processing beam PB. Here, the duration of the pulse of the processing beam PB may be defined based on a full width at half maximum and/or a full width.

Locating of the focus of the scanner head 130 may be based on the intensity profile of the reflected light. The locating of the focus of the scanner head 130 may be based on a shape of the intensity profile of the reflected light. The shape of the intensity profile may include a duration of a peak and the number of poles.

More specifically, one of intensity profiles of reflected light collected from a plurality of working distances WD may be selected, and a working distance WD corresponding to the selected intensity profile of the reflected light may be determined as a position of a focus of the scanner head 130.

For example, an intensity profile with a shortest peak duration may be selected from among the intensity profiles of the reflected light collected from the plurality of working distances WD, and a working distance WD corresponding to the selected intensity profile of the reflected light may be determined as the position of the focus of the scanner head 130.

As another example, an intensity profile with a largest number of poles may be selected from among the intensity profiles of the reflected light collected from the plurality of working distances WD, and a working distance WD corresponding to the selected intensity profile of the reflected light may be determined as the position of the focus of the scanner head 130. Here, the poles are points where a slope of a graph is zero, and the intensity profile of the reflected light may have multiple poles (e.g., two poles) when the material MT melts within the duration of the pulse of the reflected light.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
an oscillator configured to generate a processing beam;
a scanner head configured to emit the processing beam generated by the oscillator to a material;
a driving device configured to move the scanner head; and
a processor configured to locate a focus of the scanner head,
wherein the oscillator comprises a built-in sensor configured to sense reflected light that is a part of the processing beam reflected from the material, and
wherein the processor is configured to locate the focus of the scanner head, based on a signal generated by the built-in sensor.

2. The secondary battery manufacturing apparatus of claim 1, wherein the processor is further configured to collect an intensity profile of the reflected light, based on the signal.

3. The secondary battery manufacturing apparatus of claim 2, wherein the processor is configured to locate the focus of the scanner head, based on the intensity profile of the reflected light.

4. The secondary battery manufacturing apparatus of claim 3, wherein the processor is configured to locate the focus of the scanner head, based on a duration of a peak of the intensity profile of the reflected light.

5. The secondary battery manufacturing apparatus of claim 3, wherein the processor is configured to locate the focus of the scanner head, based on a shape of the intensity profile of the reflected light.

6. The secondary battery manufacturing apparatus of claim 3, wherein the processor is configured to locate the focus of the scanner head, based on a pole of the intensity profile of the reflected light.

7. A method of calibrating a secondary battery manufacturing apparatus, the method comprising:
emitting a processing beam to a material, the processing beam being emitted by a scanner head spaced a first working distance from the material;
sensing first reflected light that is a part of the processing beam reflected from the material at the first working distance; and
locating a focus of the scanner head, based on an intensity profile of the first reflected light,
wherein the first reflected light is sensed by a built-in sensor included in an oscillator configured to generate the processing beam.

8. The method of claim 7, wherein the locating of the focus of the scanner head is based on a duration of a peak of the intensity profile.

9. The manufacturing apparatus of claim 7, wherein the locating of the focus of the scanner head is based on a shape of the intensity profile.

10. The manufacturing apparatus of claim 7, wherein the locating of the focus of the scanner head is based on a pole of the intensity profile.

11. The method of claim 7, further comprising:
moving the scanner head to a second working distance;
emitting the processing beam to the material at the second working distance; and
sensing second reflected light that is a part of the processing beam reflected from the material at the second working distance.

12. The method of claim 11, wherein the focus of the scanner head is located based on an intensity profile of the second reflected light.

13. The method of claim 12, wherein the processing beam is emitted to a first part of the material at the first working distance and emitted to a second part of the material, which is spaced apart from the first part of the material, at the second working distance.
